# EUROPEAN PATENT APPLICATION

(11) **EP 3 128 659 A1**
(43) Date of publication of application: **08.02.2017**
(21) Application number: 16181410.8
(22) Date of filing: 27.07.2016
(51) Int. Cl.: H02K 29/03, H02K 29/08, H02K 1/27, H02P 6/22, H02K 11/33, H02K 1/14

(54) **REFRIGERATION APPARATUS**

(30) Priority: 07.08.2015 WO PCT/CN2015/086422; 28.08.2015 CN 201510543842; 03.06.2016 CN 201610390208
(71) Applicant: Johnson Electric S.A., 3280 Murten (CH)
(72) Inventor: Li, Yue, Hong Kong (HK); Zhou, Chui You, Hong Kong (HK); Chen, Ming, Hong Kong (HK); Zhang, Yong Gang, Hong Kong (HK); Zhu, Xiao Ning, Hong Kong (HK); Wang, Yong, Hong Kong (HK); Li, Yong, Hong Kong (HK); Sun, Chi Ping, Hong Kong (HK); Liu, Bao Ting, Hong Kong (HK); Wang, En Hui, Hong Kong (HK); Xin, Fei, Hong Kong (HK); Yeung, Shing Hin, Hong Kong (HK); Yang, Xiu Wen, Hong Kong (HK); Liu, Li Sheng, Hong Kong (HK); Cui, Yan Yun, Hong Kong (HK); Huang, Shu Juan, Hong Kong (HK)
(74) Representative: Hocking, Adrian Niall

(57) **Abstract**

A refrigeration apparatus (1) includes a fan (90) and a motor for driving the fan (90). The motor is a single phase synchronous alternating current motor (10). In comparison with the traditional motor, the single phase synchronous alternating current motor (10) has a reduced size and reduced cost, while ensuring the stable performance.

## Description

### CROSS REFERENCE TO RELATED APPLICATIONS

This non-provisional patent application claims priority under 35 U.S.C. § 119(a) from Patent Application No. 201510543842.6 filed in The People's Republic of China on 28 August, 2015, Patent Application No. PCT/CN2015/086422 filed in The People's Republic of China on 7 August, 2015, and Patent Application No. 201610390208.8 filed in The People's Republic of China on 3 June, 2016.

### FIELD OF THE INVENTION

The present invention relates to refrigeration apparatus, and in particular to a refrigeration apparatus having a single phase synchronous alternating current motor.

### BACKGROUND OF THE INVENTION

A cooling fan of a refrigeration apparatus, such as a freezer or refrigerator, includes a motor. The structure, size and cost of the motor affect the structure and cost of the whole refrigeration apparatus. How to balance between cost and motor performance has become a main subject of motor design.

### SUMMARY OF THE INVENTION

Accordingly, there is a desire to provide a refrigeration apparatus which includes an internal motor with low cost and stable performance.

A refrigeration apparatus includes a fan and a motor for driving the fan. The motor is a single phase synchronous alternating current motor.

Preferably, the single phase synchronous alternating current motor includes a stator and a rotor rotatable relative to the stator. The stator includes a stator core and windings wound around the stator core. The stator core includes an outer ring portion, a plurality of tooth bodies extending inwardly from the outer ring portion, and a pole shoe extending from a distal end to two circumferential sides of each tooth body. The windings are wound around the respective tooth bodies. The rotor is received in a space cooperatively defined by the pole shoes and includes a plurality of permanent magnetic poles disposed along a circumferential direction of the rotor. An outer surface of the permanent magnetic pole and an inner circumferential surface of the pole shoe form a symmetrical uneven air gap therebetween.

Preferably, the outer surface of each permanent magnetic pole is spaced from a central axis of the rotor by a distance progressively decreasing from a circumferential center to two circumferential sides of the outer surface, and the air gap is symmetrical about a center line of one of the permanent magnetic poles.

Preferably, each permanent magnetic pole is formed by one or more permanent magnet members, or all permanent magnetic poles are formed by a single ring shaped magnetic member, the rotor comprises a rotor core, the one or more permanent magnetic members are mounted to an outer circumferential surface of the rotor core, the outer circumferential surface of the rotor core defines a plurality of axially extending grooves, and each groove is located at a junction between two permanent magnetic poles.

Preferably, the one or more permanent magnetic members have a uniform thickness, and the outer circumferential surface of the rotor core matches with the one or more permanent magnet members in shape.

Preferably, the outer circumferential surface of the rotor core and an inner circumferential surface of the one or more permanent magnet members are located on a same cylindrical surface, and each permanent magnet member has a thickness progressively decreasing from a circumferential center to two circumferential ends of the permanent magnet member.

Preferably, a radial thickness of the pole shoe progressively decreases in a direction away from the tooth body.

Preferably, the symmetrical uneven air gap has a maximum thickness that is at least 1.5 times of its minimum thickness.

Preferably, a slot is formed between each two adjacent pole shoes, and a width of the slot is greater than zero and less than or equal to four times of a minimum thickness of the symmetrical uneven air gap.

Preferably, a width of the slot is greater than zero and less than or equal to two times of the minimum thickness of the symmetrical uneven air gap.

Preferably, the single phase synchronous alternating current motor is powered by an alternating current power source, the single phase synchronous alternating current motor comprises a stator, a rotor rotatable relative to the stator, and a driving circuit, the stator comprising a stator core and windings wound around the stator core, the driving circuit comprises an integrated circuit and a controllable bidirectional alternating current switch connected with the integrated circuit, the controllable bidirectional alternating current switch and the windings are connected in series between two terminals which are configured to be connected to the alternating power source, at least two of a rectifier, a detecting circuit and a switch control circuit are integrated in the integrated circuit, the rectifier is configured to produce a direct current voltage at least for the detecting circuit, the detecting circuit is configured to detect a polarity of a magnetic field of the rotor, and the switch control circuit is configured to control the controllable bidirectional alternating current switch to be switched between turn-on and turn-off states according to a predetermined manner based on the polarity of the alternating current power source and the polarity of the magnetic field of the rotor that is detected by the detecting circuit.

Preferably, the switch control circuit is configured to control the controllable bidirectional alternating current switch to turn on only when the alternating current power source operates in a positive half cycle and the detecting circuit detects a first polarity of the magnetic field of the rotor, or when the alternating current power source operates in a negative half cycle and the detecting circuit detects a second polarity of the magnetic field of the rotor, the second polarity being opposite to the first polarity.

Preferably, the refrigeration apparatus is a freezer.

Preferably, the single phase synchronous alternating current motor rotates at a constant 1800RPM or 1500RPM speed in a steady state.

Preferably, the single phase synchronous alternating current motor has an input voltage of 120v or 220 to 230V, an input power of 6 to 20W, and an efficiency of 50% to 80%.

The refrigeration apparatus of the present invention includes the single phase synchronous alternating current motor in its interior for driving the fan. In comparison with the traditional motor, the single phase synchronous alternating current motor has a reduced size and reduced cost, while ensuring the stable performance.

### BRIEF DESCRIPTION OF THE DRAWINGS

FIG. 1 illustrates a refrigeration apparatus of the present invention, the refrigeration apparatus including a single phase synchronous AC motor.
FIG. 2 is a perspective view of the single phase synchronous AC motor of FIG. 1 according to a first embodiment of the present invention.
FIG. 3 illustrates the single phase synchronous AC motor of FIG. 2, with the outer housing being removed.
FIG. 4 is a top view of the single phase synchronous AC motor of FIG. 3.
FIG. 5 illustrates the stator core of the single phase synchronous AC motor of FIG. 3.
FIG. 6 illustrates permanent magnet members and the rotor core of the single phase synchronous AC motor of FIG. 3.
FIG. 7 shows a torque curve of the single phase synchronous AC motor of the FIG. 2 during rotation.
FIG. 8 illustrates the stator core of the single phase synchronous AC motor of FIG. 1 according to a second embodiment of the present invention.
FIG. 9 illustrates the stator core of the single phase synchronous AC motor of FIG. 1 according to a third embodiment of the present invention.
FIG. 10 is a top view of the stator core and a rotor of the single phase synchronous AC motor of FIG. 1 according to a fourth embodiment of the present invention.
FIG. 11 is a schematic circuit diagram of the single phase synchronous AC motor of FIG. 1 according to one embodiment of the present invention.
FIG. 12 is a block diagram showing one implementation of the integrated circuit of FIG. 11.
FIG. 13 is a block diagram showing another implementation of the integrated circuit of FIG. 11.
FIG. 14 is a schematic circuit diagram of the single phase synchronous AC motor of FIG. 1 according to another embodiment of the present invention.
FIG. 15 is a block diagram showing one implementation of the integrated circuit of FIG. 14.
FIG. 16 is a schematic circuit diagram of the single phase synchronous AC motor of FIG. 1 according to still another embodiment of the present invention.

### DETAILED DESCRIPTION OF THE PREFERRED EMBODIMENTS

It should be noted that the figures are not drawn to scale and that elements of similar structures or functions are generally represented by like reference numerals for illustrative purposes throughout the figures. It also should be noted that the figures are only intended to facilitate the description of the preferred embodiments. The figures do not illustrate every aspect of the described embodiments and do not limit the scope of the present disclosure.

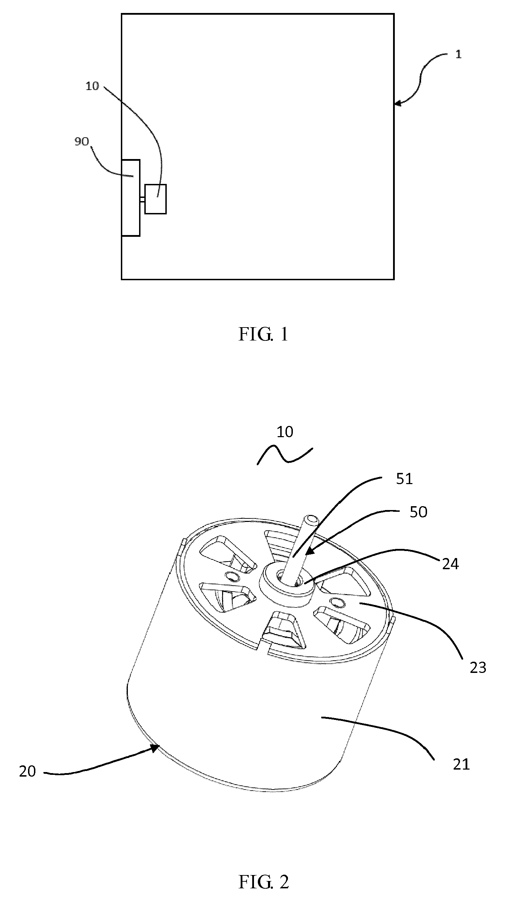

Referring to FIG. 1, the refrigeration apparatus 1 of the present invention includes a fan 90 and a single phase synchronous alternating current (AC) motor 10 for driving the fan 90. The refrigeration apparatus 1 may be a refrigerator or a freezer.

### First Embodiment

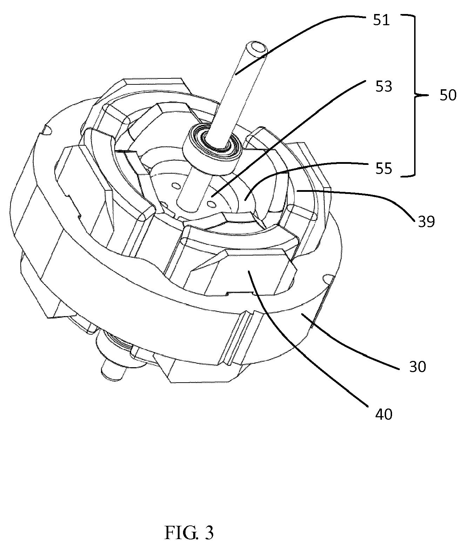

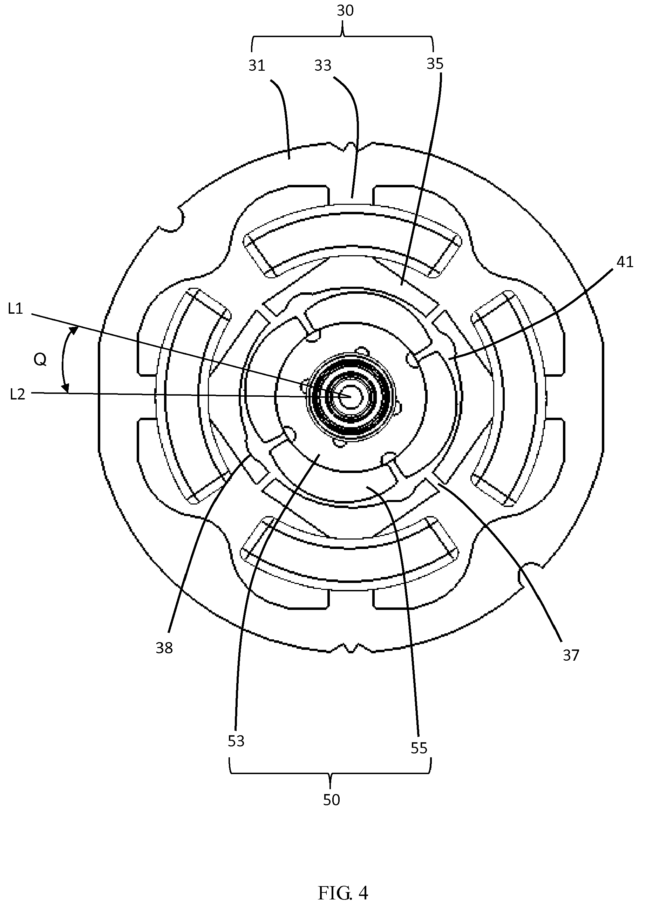

Referring to FIG. 2 to FIG. 6, the single phase synchronous AC motor 10 in accordance with a preferred embodiment of the present invention includes a stator 20 and a rotor 50 rotatable relative to the stator 20. The stator 20 includes a cylindrical outer housing 21 with one open end, an end cap 23 mounted to the open end of the outer housing 21, a stator core 30 mounted in the outer housing 21, an insulating bracket 40 mounted to the stator core 30, and windings 39 wound around the stator core 30 and supported by the insulating bracket 40. The stator core 30 includes an outer ring portion 31, a plurality of tooth bodies 33 extending inwardly from the outer ring portion 31, a pole shoe 35 extending from a radial distal end to two circumferential sides of each tooth body 33. The windings 39 are wound around the corresponding tooth bodies 33, and are isolated from the stator core 30 by the insulating bracket 40.

The rotor 50 is received in a space cooperatively defined by the pole shoes 35 of the tooth bodies. The rotor 50 includes a plurality of permanent magnetic poles 55 disposed along a circumferential direction of the rotor. An outer surface of each permanent magnetic pole 55 is an arc surface. The outer surface of each permanent magnetic pole 55 is spaced from a central axis of the rotor 50 by a distance progressively decreasing from a circumferential center to two circumferential sides of the outer surface. The outer surface of the permanent magnetic pole 55 and an inner circumferential surface of the pole shoe 35 form an uneven air gap 41 therebetween that is symmetrical about a center line of the permanent magnetic pole 55. Preferably, the symmetrical uneven air gap 41 has a maximum thickness that is at least 1.5 times of its minimum thickness.

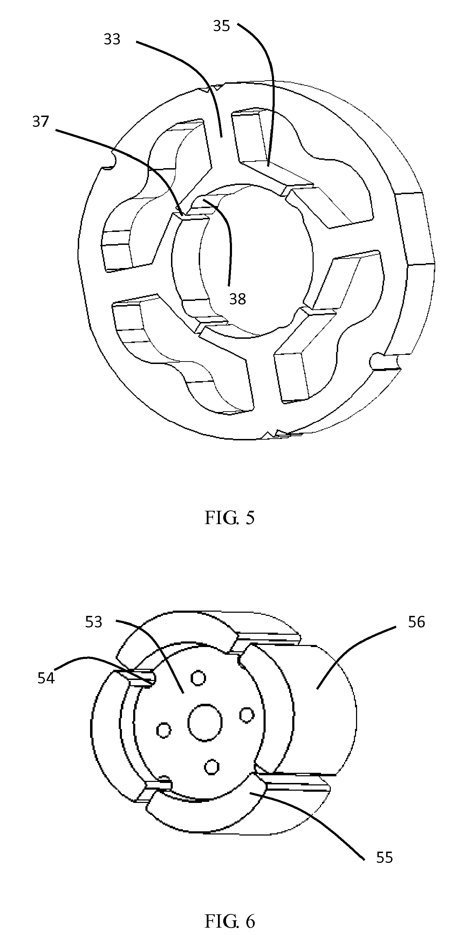

Referring to FIG. 6, in this embodiment, each permanent magnetic pole 55 is formed by a single permanent magnet member 56. The rotor 50 further includes a rotor core 53. The permanent magnet member 56 is mounted to an outer circumferential surface of the rotor core 53. The outer circumferential surface of the rotor core 53 defines a plurality of axially extending grooves 54. Each groove 54 is located at a junction between two permanent magnetic poles 55 to reduce magnetic leakage. In order to form the uneven air gap 41 between the permanent magnetic pole 55 and the inner circumferential surface of the pole shoe 35, the outer circumferential surface of the rotor core 53 and the inner circumferential surface of the pole shoe 35 are located on two concentric circles in an axial plan view, and a thickness of the permanent magnet member 56 progressively decreases from a circumferential center to two circumferential ends of the permanent magnet member 56.

The rotor 50 further includes a rotary shaft 51 passing through and fixed to the rotor core 53. One end of the rotary shaft 51 is mounted to the end cap 23 through a bearing 24, and the other end of the rotary shaft 51 is mounted to a bottom of the cylindrical outer housing 21 of the stator 20 through another bearing, such that the rotor 50 is capable of rotation relative to the stator 20.

The stator core 30 is made from a magnetic-conductive magnetic material. For example, the stator core 30 is formed by stacking magnetic laminations (silicon steel laminations commonly used in the industry) along an axial direction of the motor. In the stator core 30, a slot 37 is formed between every two adjacent pole shoes 35. Preferably, each slot 37 is located at a middle position between two adjacent tooth bodies 33. It should be understood that the slot 37 may be offset from the middle position between the two adjacent tooth bodies. This design can reduce the induction potential of the motor, thus increasing the output torque of the motor. The slot 37 has a width greater than zero and less or equal to four times of a minimum thickness of the symmetrical uneven air gap 41. Preferably, the width of the slot 37 is greater than zero and less than or equal to two times of the minimum thickness of the symmetrical uneven air gap 41. As configured above, the motor startup and rotation is smooth, which can improve the motor startup reliability and reduces the possible dead points. The term "ring portion" used in this disclosure refers to a closed structure formed by extending continuously along a circumferential direction, such as circular ring, square, polygon or the like. And the term "thickness" of the symmetrical uneven air gap 41 refers to a radial thickness of the air gap.

Preferably, a radial thickness of the pole shoe 35 progressively decreases in a direction from the tooth body 33 to the slot 37, such that the magnetic reluctance of the pole shoe 35 progressively increases in the direction from the tooth body 33 to the slot 37, thus forming a magnetic bridge with progressively increasing magnetic reluctance. This design can make the motor operation smoother and improve the reliability of the motor startup.

In this embodiment, the pole shoe 35 between each two adjacent tooth bodies 33 defines a positioning slot 38. The number of the positioning slots 38 is the same as the number of the poles of the stator 20 and the number of the ring-shaped permanent magnetic poles 55. In the present embodiment, the number of the positioning slots 38 is four. In the present embodiment, the stator winding is a concentrated winding and, therefore, the number of the tooth bodies 33is the same as the number of the poles of the stator 20. In an alternative embodiment, the number of the tooth bodies 33 can be an integer times of the number of the stator poles, such as, two times, three times or the like.

In this embodiment, the positioning slots 38 are spaced along the axial direction of the motor, and are disposed in the inner circumferential surface of the pole shoes 35. In an alternative embodiment, the positioning slots 38 extend continuously along the axial direction of the motor. Each positioning slot 38 is spaced from the two adjacent tooth bodies 33 by different distances. The positioning slot 38 is closer to one of the two adjacent tooth bodies 33, and a center of the positioning slot 38 is offset from a symmetry center of the most adjacent tooth body 33.

When the motor 10 is not energized, i.e. at an initial position, a center line L1 of the permanent magnetic pole 55 of the rotor 50 is offset from a center line L2 of the adjacent tooth body 33 of the stator 20. An angle Q formed between the center line L1 and the center line L2 is referred to as a startup angle. In this embodiment, the startup angle is greater than 45 degrees electric angle and less than 135 degrees electric angle. When the windings 39 of the stator 20 of the motor is supplied with an electric current in one direction, the rotor 50 can be started along one direction. When the windings 39 of the stator 20 of the motor is supplied with an electric current in an opposite direction, the rotor 50 can be started along an opposite direction. It should be understood that, when the startup angle is equal to 90 degrees electric angle (i.e. a center of the permanent magnetic pole 55 of the rotor 50 is aligned with the symmetry center of one adjacent tooth body 33), the rotor 50 can be easily started in both directions, i.e. it is the easiest angle to achieve bidirectional startup. When the startup angle is offset from the 90 degrees electric angle, the rotor is easier to start in one direction than in the opposite direction. It has been found from a large number of experiments that, when the startup angle is in the range of 45 degrees to 135 degrees electric angle, the startup of the rotor in both directions has good reliability.

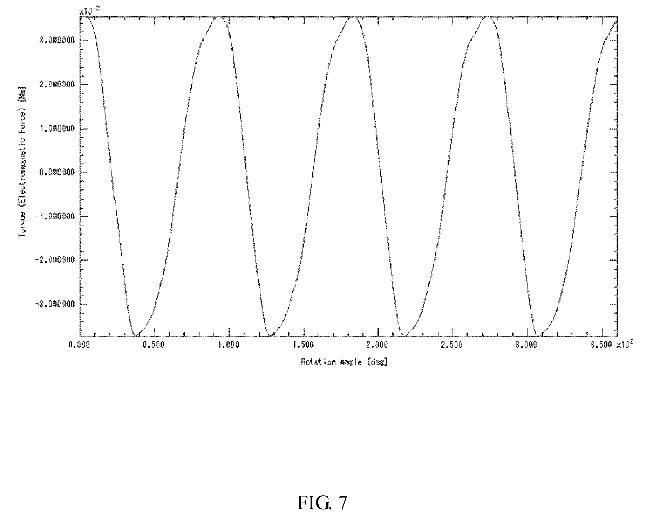

FIG. 7 shows a torque curve of the single phase synchronous AC motor 10 of the above embodiment during rotation, where the horizontal axis represents the rotation angle with the unit being degree, and the vertical axis represents the torque with the unit being Nm. As can be seen, during motor rotation, the torque curve of the motor is smooth, which reduces or avoids the startup dead point and hence improves the reliability of the motor startup.

### Second Embodiment

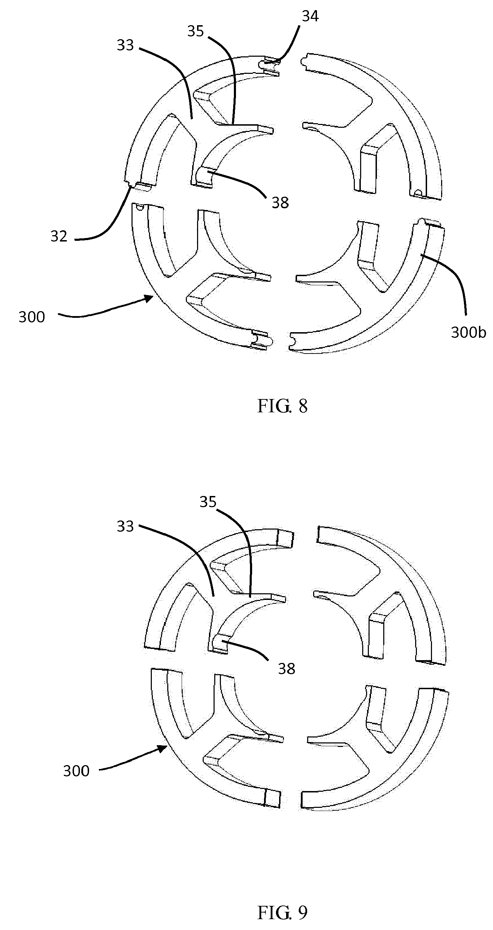

Referring to FIG. 8, different from the first embodiment, in order to increase the winding efficiency of the windings 39, the stator core of the single phase synchronous AC motor includes a plurality of stator core parts 300 joined along a circumferential direction of the stator. Each stator core part 300 includes an arcuate yoke segment 300b, one tooth body 33 extending from the arcuate yoke segment 300b, and a pole shoe 35 extending from a radial distal end of the tooth body 33 to two circumferential sides of the tooth body 33. In this embodiment, each stator core part 300 includes a single tooth body 33 and one corresponding pole shoe 35. It should be understood that, each stator core part 300 may also include more than one tooth body 33 and corresponding pole shoes 35. After the winding process of each stator core part 300 is completed, the plurality of the stator core parts 300 are joined to form the stator core 30 with stator windings.

A recess-protrusion engagement structure is formed at a joining area between the arcuate yoke segments 300b of two adjacent stator core parts 300. Specifically, in forming the recess-protrusion engagement structure, two ends of the arcuate yoke segment 300b of each stator core part 300 for being connected to form the outer ring portion may be provided with an engagement recess 34 and an engagement protrusion 32, respectively. The engagement recess 34 and the engagement protrusion 32 together form the recess-protrusion engagement structure. In assembly, the engagement protrusion 32 of each stator core part 300 engages with the engagement recess 34 of one adjacent stator core part 300, and the engagement protrusion 34 of each stator core part 300 engages with the engagement protrusion 32 of an adjacent stator core part 300.

Because the stator core 30 is formed by joining multiple stator core parts 300, the slot 37 between the adjacent pole shoes can have a very small width. In this disclosure, the width of the slot refers to the distance between the two adjacent pole shoes.

### Third Embodiment

Referring to FIG. 9, different from the second embodiment, plane surfaces are formed at the joining areas of the arcuate yoke segments of the adjacent stator core parts 300 of the single phase synchronous AC motor of this embodiment. In this case, the joining areas of the arcuate yoke segments can be connected by soldering.

### Fourth Embodiment

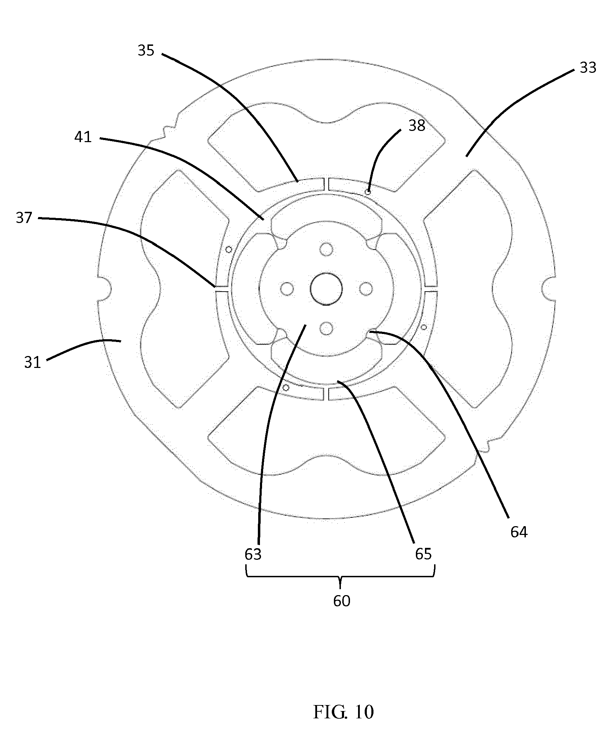

Referring to FIG. 10, in this embodiment, the pole shoe 35 between each two adjacent tooth bodies 33 of the single phase synchronous AC motor likewise forms a positioning slot 38. Differently, the positioning slot 38 of this embodiment is disposed between the outer circumferential surface and the inner circumferential surface of the pole shoe 35 and, preferably, disposed close to the inner circumferential surface of the pole shoe 35.

In this embodiment, the rotor 60 includes a plurality of permanent magnetic poles 65 arranged along a circumferential direction of the rotor 60. An outer circumferential surface of each permanent magnetic pole 65 is an arc surface, such that the permanent magnetic pole 65 and the inner circumferential surface of the pole shoe 35 form a symmetrical uneven air gap 41 therebetween. Preferably, the symmetrical uneven air gap 41 has a maximum thickness that is at least 1.5 times of its minimum thickness. Each permanent magnetic pole 65 is formed by a single permanent magnet member. The permanent magnet member is mounted to an outer circumferential surface of the rotor core 63. The outer circumferential surface of the rotor core 63 defines a plurality of axially extending grooves 64. Each groove 64 is located at a junction between two permanent magnetic poles 65 to reduce magnetic leakage. Different from the first embodiment, the thickness of the permanent magnet member of this embodiment is uniform, and the outer circumferential surface of the rotor core 63 matches with the permanent magnet member in shape. That is, the outer circumferential surface of the rotor core 63 and the inner circumferential surface of the pole shoes 35 are no longer located on concentric circles in the axial plan view. As such, the outer surfaces of the permanent magnetic poles 65 and the inner circumferential surfaces of the pole shoes 35 can still form the symmetrical uneven air gap 41 therebetwen because the outer surface of the permanent magnetic pole 65 is still an arc surface. Alternatively, all the permanent magnetic poles 65 may be formed by a single permanent magnet member.

In the above embodiment, the slot 37 between every two adjacent pole shoes 35 has a uniform circumferential width. It should be understood that, in an alternative embodiment, each slot 37 may also have a non-uniform circumferential width. For example, the slot 37 may be trumpet-shaped with a smaller inside and a larger outside. In this case, the width of the slot 37 refers to a minimum width of the slot 37 in this disclosure. In the above embodiment, the slot 37 extends along a radial direction of the motor. Alternatively, the slot 37 may also extend in a direction deviating from the radial direction of the motor, which can reduce the induction potential of the motor.

In the single phase synchronous AC motor provided by the present invention, the slots 37 are formed between the adjacent pole shoes 35, and the width of each slot 37 is greater than zero and less than or equal to four times of the minimum thickness of the air gap 41, which can reduce sudden change of the magnetic reluctance caused by a slot opening, thereby reducing the cogging torque of the motor. In addition, the outer surface of the permanent magnetic pole is configured to be an arc surface, such that the thickness of the air gap 41 progressively increases from a center of the permanent magnetic pole to two circumferential sides of the permanent magnetic pole, thus forming the symmetrical uneven air gap. This design reduces the vibration and noise produced in the conventional motor due to the unduly large slot openings, reduces or avoids the possible startup dead point, and improve the reliability of the motor startup. In addition, the startup angle and the cogging torque needed during startup of the exemplified single phase synchronous AC motor can be easily adjusted according to design requirements, thus ensuring the reliability of the motor startup. For example, the motor startup angle can be easily adjusted by adjusting the position of the positioning slot of the pole shoe. When the startup angle Q is greater than 45 degrees electric angle and less than 135 degrees electric angle, the motor rotor can achieve bidirectional startup. The cogging torque prior to the startup of the motor can be adjusted by adjusting the shape, size and depth of the positioning slots of the pole shoes. The stator core is of a split-type structure, such that the winding process can be performed by using a double-flyer winding machine prior to the assembly of the tooth bodies and the outer ring portion, which increases the winding efficiency.

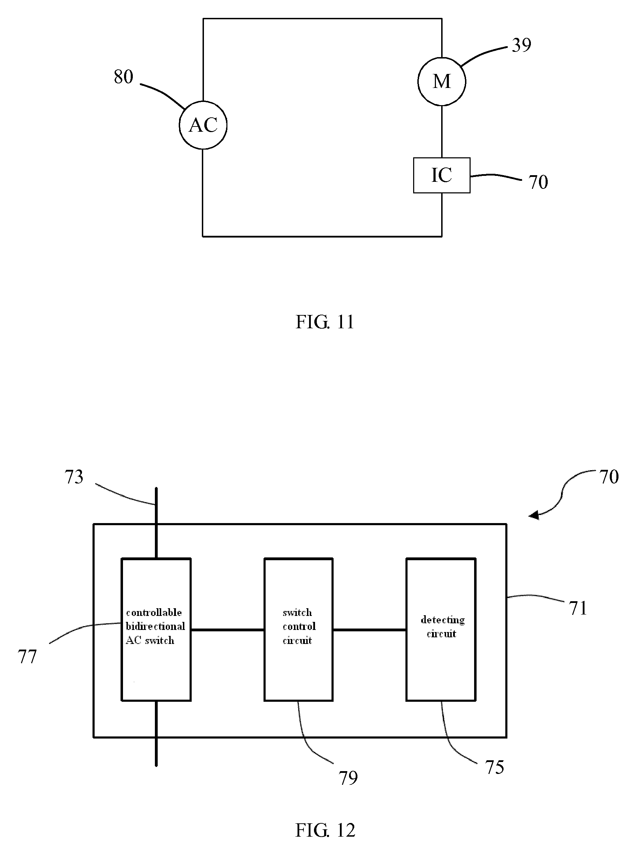

FIG. 11 illustrates a schematic circuit diagram of a driving circuit of the single phase synchronous AC motor 10 of the refrigeration apparatus according to one embodiment of the present invention. The winding 39 of the stator of the motor and an integrated circuit 70 are connected in series between two terminals of an AC power source 80. The driving circuit of the motor 10 is integrated in the integrated circuit 70. The driving circuit can drive the motor to start along a fixed direction each time the motor is energized.

FIG. 12 illustrates an implementation way of the integrated circuit 70. The integrated circuit 70 includes a housing 71, two pins 73 extending out of the housing 71, and a driving circuit packaged in the housing 71. The driving circuit is disposed on a semiconductor substrate, including a detecting circuit 75 for detecting a polarity of the rotor magnetic field of the motor, a controllable bidirectional AC switch 77 connected between the two pins 73, and a switch control circuit 79. The switch control circuit 79 is configured to control the controllable bidirectional AC switch 77 to be switched between turn-on and turn-off states according to a predetermined manner based on the rotor magnetic field polarity detected by the detecting circuit 75.

Preferably, the switch control circuit 79 is configured to control the controllable bidirectional AC switch 77 to turn on only when the AC power source 80 operates in a positive half cycle and the detecting circuit 75 detects a first polarity of the rotor magnetic field, or when the AC power source 80 operates in a negative half cycle and the detecting circuit 75 detects a second polarity of the rotor magnetic field, the second polarity being opposite to the first polarity. This configuration can make the winding 39 of the stator drive the rotor to rotate along a fixed direction during the motor startup.

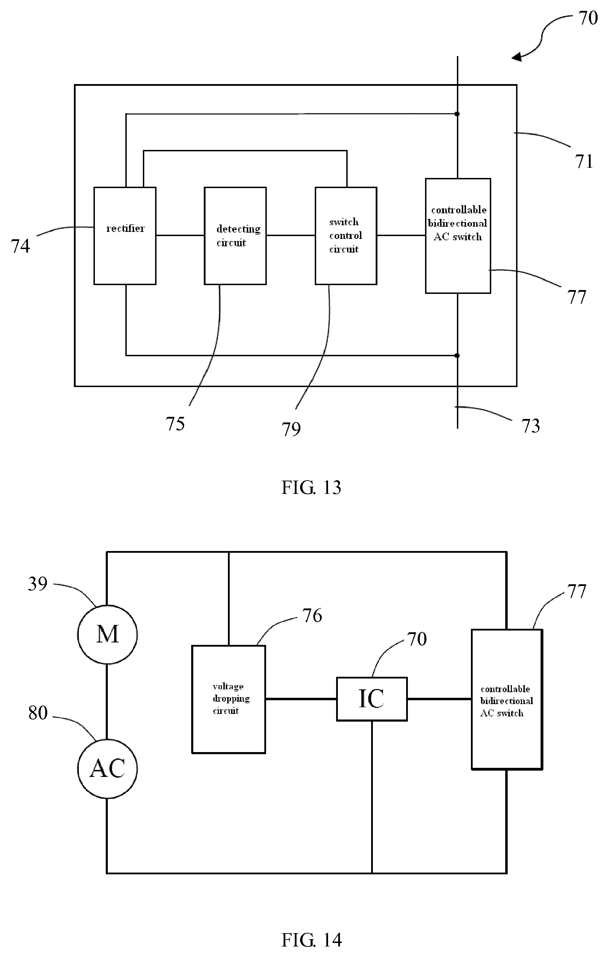

FIG. 13 illustrates another implementation way of the integrated circuit 70, which differs from FIG. 12 main in that: the integrated circuit of FIG. 13 further includes a rectifier 74 which is connected between the two pins 73 in parallel with the controllable bidirectional AC switch 77, for producing a direct current for the detecting circuit 75. In this embodiment, the detecting circuit 75 is preferably a magnetic sensor (also referred to as position sensor), and the integrated circuit is mounted adjacent to the rotor such that the magnetic sensor can sense the change of the rotor magnetic field. It should be understood that, in some other embodiments, the detecting circuit 75 may also not include the magnetic sensor. Rather, the detecting circuit 75 detects the change of the rotor magnetic field by other means. In embodiments of the present invention, the driving circuit of the motor is packaged in the integrated circuit, which can reduce cost of the circuit and improve the reliability of the circuit. In addition, the motor may not use a printed circuit board. Rather, the integrated circuit is simply fixed to a suitable location and then connected the winding of the motor and power source through wires.

In this embodiment, the stator winding 39 and the AC power source 80 are connected in series between the two pins 73. The AC power source 80 is preferably a city AC power source with a fixed frequency such as 50 Hz or 60 Hz, a voltage of, for example, 110V, 220V or 230V, and an input power of 6 to 20W. The controllable bidirectional AC switch 77 is connected between the two pins 73, in parallel with the series-connected stator winding 39 and AC power 80. The controllable bidirectional AC switch 77 is preferably a triode AC switch (TRIAC) having two anodes connected to the two pins 73, respectively. It should be understood that the controllable bidirectional AC switch 77 may also be implemented by two unidirectional thyristors reversely connected in parallel that are controlled by a corresponding control circuit according to a predetermined manner. The rectifier 74 is connected between the two pins 73, in parallel with the controllable bidirectional AC switch 77. The rectifier 74 converts the AC power between the two pins 73 into a low voltage DC power. The detecting circuit 75 may be powered by the low voltage DC power outputted from the rectifier 74, for detecting the position of the magnetic poles of the permanent magnet rotor 50 of the single phase synchronous AC motor 10 and outputting corresponding signals. The switch control circuit 79 is connected with the rectifier 74, the detecting circuit 75 and the controllable bidirectional AC switch 77, and is configured to control the controllable bidirectional AC switch 77 to be switched between turn-on and turn-off states in a predetermined manner based on the rotor magnetic pole position information detected by the detecting circuit 75 and polarity information of the AC power source 80 obtained from the rectifier 74, such that the stator winding 39 drives the rotor 50 to rotate only along the above described fixed startup direction during the motor startup. In this embodiment, when the controllable bidirectional AC switch 82 is turned on, the two pins 73 are short-circuited, and the rectifier 74 does not consume power because no electrical current flows therethrough, such that the power utilization efficiency can be greatly enhanced.

In one embodiment, an input power the AC power source 80 provides to the motor having a voltage of 120V, a frequency of 60 Hz and an input power of 14.2W, and the rotor of the motor rotates at a constant 1800RPM speed in a steady state. In another embodiment, the motor has an efficiency of 50% to 80%.

FIG. 14 illustrates a schematic circuit diagram of a driving circuit of the single phase synchronous AC motor 10 of the refrigeration apparatus according to another embodiment of the present invention. The winding 39 of the stator of the motor and an integrated circuit 70 are connected in series between two terminals of an AC power source 80. The driving circuit of the motor 10 is integrated in the integrated circuit 70. The driving circuit can drive the motor to start along a fixed direction each time the motor is energized. In this embodiment of the invention, the driving circuit of the motor is packaged in the integrated circuit, which can reduce cost of the circuit and improve the reliability of the circuit.

In this embodiment, all or part of the rectifier, detecting circuit, switch control circuit and controllable bidirectional AC switch are optionally integrated in the integrated circuit. For example, as shown in FIG. 12, only the detecting circuit, the switch control circuit and the controllable bidirectional AC switch may be integrated in the integrated circuit, while the rectifier is disposed outside the integrated circuit.

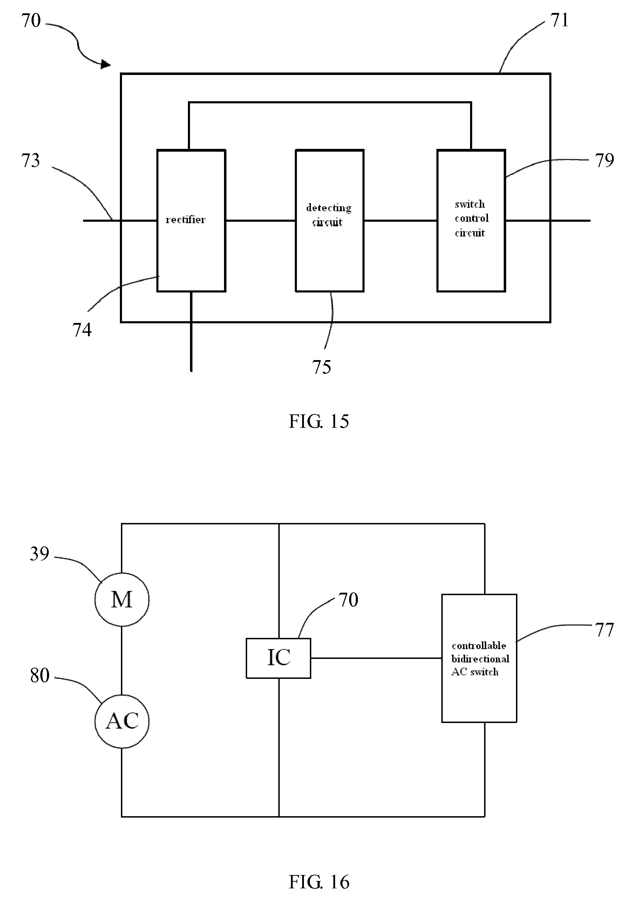

For another example, as in embodiments shown in FIG. 14 and FIG. 15, a voltage reduction circuit 76 and the controllable bidirectional AC switch 77 are disposed outside the integrated circuit 70, while the rectifier 74 (which may only include a rectifier bridge but does not include a voltage reduction resistor or another voltage reduction element), the detecting circuit 75 and the switch control circuit 79 are integrated in the integrated circuit 70. In this embodiment, low power elements are integrated in the integrated circuit, and high power elements such as the voltage reduction circuit 76 and the controllable bidirectional AC switch 77 are disposed outside the integrated circuit 70. In another embodiment as shown in FIG. 16, it is also possible to integrate the voltage reduction circuit 76 into the integrated circuit 79, with the controllable bidirectional AC switch 77 disposed outside the integrated circuit 70.

Although the invention is described with reference to one or more preferred embodiments, it should be appreciated by those skilled in the art that various modifications are possible. Therefore, the scope of the invention is to be determined by reference to the claims that follow.

## Claims

1. A refrigeration apparatus (1) comprising a fan (90) and a motor for driving the fan (90), wherein the motor is a single phase synchronous alternating current motor (10).

2. The refrigeration apparatus of claim 1, wherein the single phase synchronous alternating current motor (10) comprises:
a stator (20) comprising a stator core (30) and windings (39) wound around the stator core (30), the stator core (30) comprising an outer ring portion (31), a plurality of tooth bodies (33) extending inwardly from the outer ring portion (31), and a pole shoe (35) extending from a distal end to two circumferential sides of each tooth body (33), the windings (39) being wound around the respective tooth bodies (33); and
a rotor (50, 60) rotatable relative to the stator (20), the rotor (50, 60) being received in a space cooperatively defined by the pole shoes (35) and comprising a plurality of permanent magnetic poles (55, 65) disposed along a circumferential direction of the rotor (50, 60), wherein an outer surface of the permanent magnetic poles (55, 65) and inner circumferential surfaces of the pole shoes (35) form a symmetrical uneven air gap (41) therebetween.

3. The refrigeration apparatus of claim 2, wherein the outer surface of each permanent magnetic pole (55, 65) is spaced from a central axis of the rotor (50, 60) by a distance progressively decreasing from a circumferential center to two circumferential sides of the outer surface, and the air gap (41) is symmetrical about a center line of one of the permanent magnetic poles (55, 65).

4. The refrigeration apparatus of claim 3, wherein each permanent magnetic pole (55, 65) is formed by one or more permanent magnet members (56), or all permanent magnetic poles (55, 65) are formed by a single ring shaped magnetic member, the rotor (50, 60) comprises a rotor core (53, 63), the one or more permanent magnetic members (56) are mounted to an outer circumferential surface of the rotor core (53, 63), the outer circumferential surface of the rotor core (53, 63) defines a plurality of axially extending grooves (54, 64), and each groove (54, 64) is located at a junction between two permanent magnetic poles (55, 65).

5. The refrigeration apparatus of claim 4, wherein the one or more permanent magnetic members have a uniform thickness, and the outer circumferential surface of the rotor core (63) matches with the one or more permanent magnet members in shape.

6. The refrigeration apparatus of claim 4, wherein the outer circumferential surface of the rotor core (53) and an inner circumferential surface of the one or more permanent magnet members (56) are located on a same cylindrical surface, and each permanent magnet member (56) has a thickness progressively decreasing from a circumferential center to two circumferential ends of the permanent magnet member (56).

7. The refrigeration apparatus of claim 2, wherein a radial thickness of the pole shoe (35) progressively decreases in a direction away from the tooth body (33).

8. The refrigeration apparatus of claim 2, wherein the symmetrical uneven air gap (41) has a maximum thickness that is at least 1.5 times of its minimum thickness.

9. The refrigeration apparatus of claim 2, wherein a slot (37) is formed between each two adjacent pole shoes (35), and a width of the slot (37) is greater than zero and less than or equal to four times of a minimum thickness of the symmetrical uneven air gap (41).

10. The refrigeration apparatus of claim 9, wherein a width of the slot (37) is greater than zero and less than or equal to two times of the minimum thickness of the symmetrical uneven air gap (41).

11. The refrigeration apparatus of any one of claims 1-10, wherein the single phase synchronous alternating current motor (10) is powered by an alternating current power source (80), the single phase synchronous alternating current motor (10) comprises a stator (20), a rotor (50, 60) rotatable relative to the stator (20), and a driving circuit, the stator (20) comprising a stator core (30) and windings (39) wound around the stator core (30), the driving circuit comprises an integrated circuit (70) and a controllable bidirectional alternating current switch (77) connected with the integrated circuit (70), the controllable bidirectional alternating current switch (77) and the windings (39) are connected in series between two terminals which are configured to be connected to the alternating power source (80), at least two of a rectifier (74), a detecting circuit (75) and a switch control circuit (79) are integrated in the integrated circuit (70), the rectifier (74) is configured to produce a direct current voltage at least for the detecting circuit (75), the detecting circuit (75) is configured to detect a polarity of a magnetic field of the rotor, and the switch control circuit (79) is configured to control the controllable bidirectional alternating current switch (77) to be switched between turn-on and turn-off states according to a predetermined manner based on the polarity of the alternating current power source (80) and the polarity of the magnetic field of the rotor that is detected by the detecting circuit (75).

12. The refrigeration apparatus of claim 11, wherein the switch control circuit (79) is configured to control the controllable bidirectional alternating current switch (77) to turn on only when the alternating current power source (80) operates in a positive half cycle and the detecting circuit (75) detects a first polarity of the magnetic field of the rotor, or when the alternating current power source (80) operates in a negative half cycle and the detecting circuit (75) detects a second polarity of the magnetic field of the rotor, the second polarity being opposite to the first polarity.

13. The refrigeration apparatus of any one of claims 1-12, wherein the refrigeration apparatus (1) is a freezer.

14. The refrigeration apparatus of claim 13, wherein the single phase synchronous alternating current motor (10) rotates at a constant 1800RPM or 1500RPM speed in a steady state.

15. The refrigeration apparatus of claim 13, wherein the single phase synchronous alternating current motor (10) has an input voltage of 120v or 220 to 230V, an input power of 6 to 20W, and an efficiency of 50% to 80%.
